# EUROPÄISCHE PATENTSCHRIFT

(11) **EP 4 065 439 B1**
(45) Veröffentlichungstag und Bekanntmachung des Hinweises auf die Patenterteilung: **13.12.2023**
(21) Anmeldenummer: 20800098.4
(22) Anmeldetag: 29.10.2020
(51) Int. Cl.: B60T 8/40, B60T 13/16, B60T 13/74, B60T 17/02, F04B 9/02, F04B 17/03

(54) **HYDRAULIKBLOCK FÜR EIN HYDRAULIKAGGREGAT EINER HYDRAULISCHEN FREMDKRAFT-FAHRZEUGBREMSANLAGE**
HYDRAULIC BLOCK FOR A HYDRAULIC ARRANGEMENT OF A BRAKE SYSTEM FOR A VEHICLE
BLOQUE HYDRAULIQUE POUR UN MONTAGE HYDRAULIQUE DE SYSTÈME DE FREIN DE VÉHICULE

(30) Priorität: 28.11.2019 DE 102019218481
(43) Veröffentlichungstag der Anmeldung: 05.10.2022
(73) Patentinhaber: Robert Bosch GmbH, 70442 Stuttgart (DE)
(72) Erfinder: WEH, Andreas, 87477 Sulzberg (DE); HAGSPIEL, Martin, 87549 Rettenberg (DE); KASERER, Stefan, 87527 Ofterschwang (DE); MAYR, Matthias, 87549 Rettenberg (DE)
(86) Internationale Anmeldenummer: PCT/EP2020/080386
(87) Internationale Veröffentlichungsnummer: WO 2021/104790

(56) Entgegenhaltungen:
- WO-A1-2017/089007
- WO-A1-2019/037967
- DE-A1-102014 106 533
- DE-A1-102015 225 712

## Beschreibung

Die Erfindung betrifft einen Hydraulikblock für ein Hydraulikaggregat einer hydraulischen Fahrzeugbremsanlage mit den Merkmalen des Oberbegriffs des Anspruchs 1.

### Stand der Technik

Ein Hydraulikblock für ein Hydraulikaggregat einer hydraulischen Fremdkraft-Fahrzeugbremsanlage mit einer Fremdkraftzylinderbohrung in welcher ein Fremdkraftkolben axial verschieblich aufgenommen und mit einer Kolbendichtung abgedichtet ist, ist aus der WO 2017/089007 A1 bereits bekannt. Diese Fremdkraftzylinderbohrung weist darüber hinaus einen Führungsabschnitt auf einer Druckseite der Kolbendichtung auf, in dem sie den Fremdkraftkolben radial führt.

Hydraulikblöcke für Hydraulikaggregate hydraulischer Fremdkraft-Fahrzeugbremsanlagen mit axial verschieblich in Fremdkraftzylinderbohrungen aufgenommenen Fremdkraftkolben sind ferner aus der DE 20 2015 225712 A1 oder aus der WO 2019/037967 A1 bekannt.

Abgesehen davon offenbart die DE 10 2014 106533 A1 eine Scheibenbremse für ein Nutzfahrzeug, bei der an einem Bremssattel ein Festlager vorgesehen ist, das eine metallische Lagerbuchse aufweist. An einer Innenfläche dieser Lagerbuchse sind Vertiefungen zur Aufnahme von Schmiermittel vorgesehen, wobei zumindest ein Teil der Vertiefungen ist als Schmiernuten ausgebildet sind.

Schließlich offenbart die internationale Patentanmeldung WO 2013/023 953 A1 ein Hydraulikaggregat für eine schlupfgeregelte, hydraulische Fremdkraft-Fahrzeugbremsanlage. Das Hydraulikaggregat weist einen Hydraulikblock auf, in dem eine Hauptbremszylinderbohrung angebracht ist, in der ein Hauptbremszylinderkolben zu einer Muskelkraftbetätigung der Fahrzeugbremsanlage axial verschiebbar aufgenommen ist. Der Hauptbremszylinderkolben lässt sich über eine Pedalstange, die gelenkig mit dem Hauptbremszylinderkolben und mit einem Fußbremspedal verbunden ist, in der Hauptbremszylinderbohrung verschieben. Zu einer Fremdkraftbetätigung der Fahrzeugbremsanlage weist der Hydraulikblock eine Fremdkraftzylinderbohrung auf, in der ein Fremdkraftkolben mit einem Elektromotor über ein Schraubgetriebe verschiebbar ist.

### Offenbarung der Erfindung

Der erfindungsgemäße Hydraulikblock mit den Merkmalen des Anspruchs 1 ist für ein Hydraulikaggregat einer hydraulischen, insbesondere schlupfgeregelten Fremdkraft-Fahrzeugbremsanlage vorgesehen. Schlupfregelungen sind insbesondere eine Blockierschutz-, Antriebsschlupf- und/oder Fahrdynamikregelung/elektronisches Stabilitätsprogramm, wofür die Abkürzungen ABS, ASR und/oder FDR/ESP gebräuchlich sind. Letztere werden umgangssprachlich auch als "Schleuderschutzregelungen" bezeichnet. Schlupfregelungen sind bekannt und werden hier nicht näher erläutert.

Der Hydraulikblock dient einer mechanischen Befestigung und hydraulischen Verschaltung hydraulischer Bauelemente der Fahrzeugbremsanlage bzw. ihrer Bremsdruckregelung und/oder Schlupfregelung. Solche hydraulischen Bauelemente sind unter anderem Magnetventile, Rückschlagventile, Hydrospeicher, Dämpferkammern und Drucksensoren. Die hydraulischen Bauelemente sind in Aufnahmen im Hydraulikblock befestigt, die meist als zylindrische Durchgangs- oder Sacklöcher, teilweise mit Durchmesserstufungen, ausgebildet sind. "Verschaltung" bedeutet, dass die Aufnahmen bzw. die in ihnen befestigten hydraulischen Bauelemente durch Leitungen im Hydraulikblock entsprechend einem hydraulischen Schaltplan der Fahrzeugbremsanlage bzw. ihrer Schlupfregelung verbunden sind. Die Leitungen sind typischerweise im Hydraulikblock gebohrt.

Bestückt mit den hydraulischen Bauelementen der Fahrzeugbremsanlage bzw. ihrer Schlupfregelung bildet der Hydraulikblock ein Hydraulikaggregat, wobei "bestückt" bedeutet, dass die hydraulischen Bauelemente in den für sie jeweils vorgesehenen Aufnahmen des Hydraulikblocks befestigt sind.

Über Bremsleitungen sind oder werden hydraulische Radbremsen der Fahrzeugbremsanlage an den Hydraulikblock angeschlossen.

Für eine Fremdkraftbedtätigung der Fahrzeugbremsanlage weist der erfindungsgemäße Hydraulikblock eine Fremdkraftzylinderbohrung auf, in der ein Fremdkraftkolben axial verschieblich aufgenommen ist. Die Fremdkraftzylinderbohrung wird vielfach auch als Plungerzylinder und der Fremdkraftkolben als Plungerkolben bezeichnet. Zur Erzeugung eines Bremsdrucks ist der Fremdkraftkolben mit einem Fremdkraftantrieb, der beispielsweise einen Elektromotor und einen Gewindetrieb aufweist, in der Fremdkraftzylinderbohrung verschiebbar. Zur axial verschieblichen Führung des Fremdkraftkolbens weist die Fremdkraftzylinderbohrung einen Führungsabschnitt auf, der sich über einen Teil einer axialen Länge der Fremdkraftzylinderbohrung erstreckt und den Fremdkraftkolben radial führt. Insbesondere weist die Fremdkraftzylinderbohrung im Führungsabschnitt den gleichen Durchmesser wie der Fremdkraftkolben auf. Im Führungsabschnitt kann die Fremdkraftzylinderbohrung auch einen geringfügig größeren Durchmesser als der Fremdkraftkolben aufweisen, der notwendig ist, damit der Fremdkraftkolben ohne zu klemmen axial verschiebbar ist. Außerhalb des Führungsabschnitts weist die Fremdkraftzylinderbohrung einen größeren Durchmesser auf, so dass der Fremdkraftkolben dort vorzugsweise nicht an einer Umfangsfläche der Fremdkraftzylinderbohrung anliegt.

Der Fremdkraftkolben ist mit einer Kolbendichtung, insbesondere einem Dichtring, in der Fremdkraftzylinderbohrung abgedichtet. Der Führungsabschnitt der Fremdkraftzylinderbohrung für den Fremdkraftkolben befindet sich erfindungsgemäß auf einer Druckseite der Kolbendichtung. Die Druckseite ist die Seite, auf der der Fremdkraftkolben bei seiner Verschiebung in der Fremdkraftzylinderbohrung einen Bremsdruck zur Betätigung der Fahrzeugbremsanlage erzeugt. Der Führungsabschnitt erstreckt sich also von der Kolbendichtung in einen Arbeitsraum der Fremdkraftzylinderbohrung, den der Fremdkraftkolben an einer Seite begrenzt und dessen Volumen der Fremdkraftkolben bei seiner Verschiebung zur Bremsbetätigung verkleinert, um Bremsflüssigkeit aus dem Arbeitsraum in Richtung hydraulischer Radbremsen zu verdrängen. Der Führungsabschnitt der Fremdkraftzylinderbohrung für den Fremdkraftkolben kann an der Kolbendichtung enden oder sich auf einer der Druckseite gegenüberliegenden Seite über die Kolbendichtung hinweg beispielsweise bis zu einer zweiten Kolbendichtung erstrecken.

Erfindungsgemäß weist der Hydraulikblock einen Bremsflüssigkeitskanal in der Umfangsfläche Fremdkraftzylinderbohrung im Führungsabschnitt auf der Druckseite des Fremdkraftkolbens auf, der bis zur Kolbendichtung reicht. Der Bremsflüssigkeitskanal ist beispielsweise eine Rille oder eine Nut im Führungsabschnitt der Fremdkraftzylinderbohrung und kann beispielsweise achsparallel oder schraubenlinienförmig verlaufen. Durch den Bremsflüssigkeitskanal gelangt Bremsflüssigkeit aus dem Arbeitsraum der Fremdkraftzylinderbohrung zur Kolbendichtung um diese zu schmieren. Durch den Bremsflüssigkeitskanal kommuniziert der Arbeitsraum der Fremdkraftzylinderbohrung mit einer Bremsflüssigkeitsleitung, die innerhalb des Führungsabschnitts in die Fremdkraftzylinderbohrung mündet. Durch die Bremsflüssigkeitsleitung kommuniziert der Arbeitsraum der Fremdkraftzylinderbohrung beispielsweise mit einem Bremsflüssigkeitsvorratsbehälter und/oder mit den Radbremsen.

Hier als "Bohrungen" bezeichnete Löcher im Hydraulikblock wie beispielsweise die Fremdkraftzylinderbohrung oder eine Hauptbremszylinderbohrung können auch anders als durch Bohren hergestellt sein.

Die abhängigen Ansprüche haben Weiterbildungen und vorteilhafte Ausgestaltungen der im unabhängigen Anspruch angegebenen Erfindung zum Gegenstand.

Sämtliche in der Beschreibung und der Zeichnung offenbarten Merkmale können einzeln für sich oder in grundsätzlich beliebiger Kombination bei Ausführungsformen der Erfindung verwirklicht sein. Ausführungen der Erfindung, die nicht alle, sondern nur ein oder mehrere Merkmale eines Anspruchs oder einer Ausführungsform der Erfindung aufweisen, sind grundsätzlich möglich.

### Kurze Beschreibung der Zeichnung

Die Erfindung wird nachfolgend anhand einer in der Zeichnung dargestellten Ausführungsform näher erläutert. Die einzige Figur zeigt einen Schnitt eines erfindungsgemäßen Hydraulikblocks axial durch eine Fremdkraftzylinderbohrung.

### Ausführungsform der Erfindung

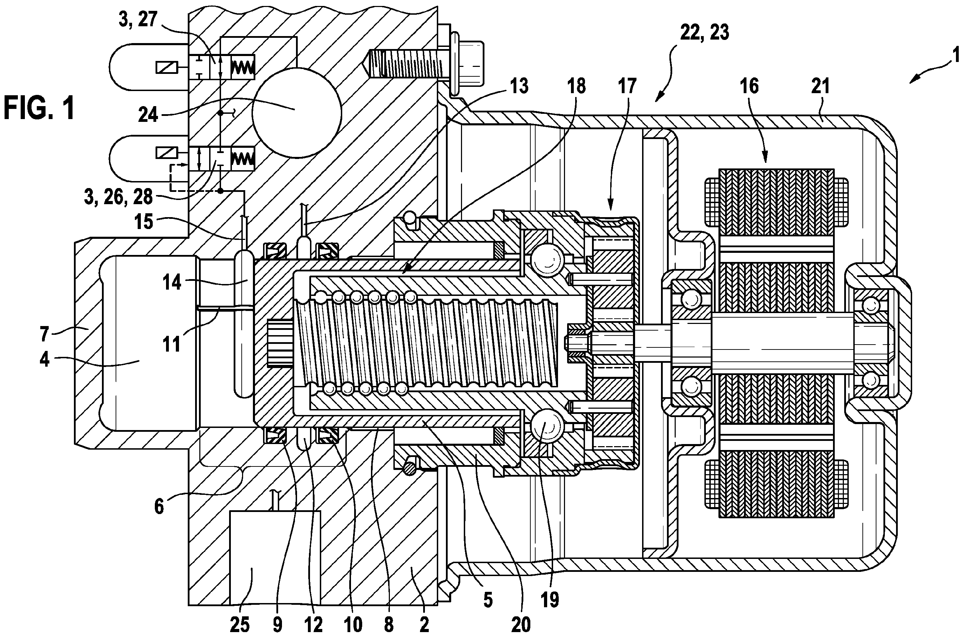

Das in Figur 1 dargestellte, erfindungsgemäße Hydraulikaggregat 1 ist zu einer Bremsdruckerzeugung in einer hydraulischen, eine Schlupfregelung aufweisenden Fremdkraft-Fahrzeugbremsanlage vorgesehen. Solche Schlupfregelungen sind beispielsweise Blockierschutz-, Antriebsschlupf- und/oder Fahrdynamikregelungen/elektronische Stabilitätsprogramme, für die die Abkürzungen ABS, ASR, FDR/ESP gebräuchlich sind.

Das erfindungsgemäße Hydraulikaggregat 1 weist einen Hydraulikblock 2 auf, der einer mechanischen Befestigung und hydraulischen Verschaltung hydraulischer und anderer Bauelemente der Schlupfregelung wie Magnetventile, Rückschlagventile, Hydrospeicher und Dämpferkammern dient. Die Bauelemente sind an und in dem Hydraulikblock 1 angeordnet und durch eine nicht gezeichnete Verbohrung des Hydraulikblocks 2 entsprechend einem hydraulischen Schaltplan der Fremdkraft-Fahrzeugbremsanlage und der Schlupfregelung hydraulisch miteinander verbunden. Zwei Magnetventile 3 sind beispielhaft als Schaltzeichen dargestellt.

In der dargestellten und beschriebenen Ausführungsform der Erfindung ist der Hydraulikblock 2 ein quaderförmiger, flacher Metallblock aus beispielsweise einer Aluminiumlegierung, der mit Bohrungen zur Aufnahme der Bauelemente der Schlupfregelung versehen und entsprechend dem hydraulischen Schaltplan der Fahrzeugbremsanlage und der Schlupfregelung verbohrt ist.

Der Hydraulikblock 2 weist eine Fremdkraftzylinderbohrung 4 auf, in der ein Fremdkraftkolben 5 axial verschiebbar aufgenommen ist. Die Fremdkraftzylinderbohrung 4 erstreckt sich quer durch den Hydraulikblock 2 und ist an einem Ende offen. An einem anderen, geschlossenen Ende auf einer gegenüberliegenden Seite des Hydraulikblocks 2 weist der Hydraulikblock 2 eine nach außen abstehenden, mit dem Hydraulikblock 2 einstückige, zur Fremdkraftzylinderbohrung 4 koaxiale, zylindrische, napfförmige Ausformung 7 auf, die die Fremdkraftzylinderbohrung 4 axial verlängert. Zu einer axial verschieblichen Führung des Fremdkraftkolbens 5 weist die Fremdkraftzylinderbohrung 4 einen Führungsabschnitt 6 auf, der sich in axialer Richtung über einen Teil einer Länge der Fremdkraftzylinderbohrung 4 erstreckt und den Fremdkraftkolben 5 radial in der Fremdkraftzylinderbohrung 4 führt. Im Führungsabschnitt 6 weist die Fremdkraftzylinderbohrung 4 den gleichen Durchmesser wie der Fremdkraftkolben 5 auf. Im Führungsabschnitt 6 kann der Durchmesser der Fremdkraftzylinderbohrung 4 auch geringfügig um so viel größer sein, dass der Fremdkraftkolben 5 Spiel aufweist und ohne zu klemmen axial verschieblich ist. Axial beiderseits außerhalb des Führungsabschnitts 6 weist die Fremdkraftzylinderbohrung 4 einen größeren Durchmesser als der Fremdkraftkolben 5 auf, so dass ein den Fremdkraftkolben 5 umschließender Ringspalt 8 besteht.

Im Führungsabschnitt 6 weist die Fremdkraftzylinderbohrung 4 zwei axial beabstandete, umlaufende Dichtnuten auf, in denen jeweils eine Kolbendichtung 9, 10 angeordnet ist, die zwischen der Fremdkraftzylinderbohrung 4 und dem Fremdkraftkolben 5 abdichten. Die der Ausformung 7 zugewandte Kolbendichtung 9 kann auch als Hochdruckdichtung 9 und die dem offenen Ende der Fremdkraftzylinderbohrung 4 zugewandte Kolbendichtung 10 als Niederdruckdichtung 10 aufgefasst werden. Die beiden Kolbendichtungen 9, 10 sind Dichtringe aus einem Elastomer oder einem anderen, elastisch verformbaren Kunststoff oder anderen Werkstoff. Die Kolbendichtungen 9, 10 bestehen ausschließlich aus dem als Elastomer, sie weisen keine Stützringe, Stützstege oder andere Stützelemente oder dergleichen aus Metall oder beispielsweise einem verformungsfesten Kunststoff auf. Im Ausführungsbeispiel sind die beiden Kolbendichtungen 9, 10 Lippendichtungen mit einer innen umlaufenden Dichtlippe, die dichtend an einem Außenumfang des Fremdkraftkolbens 5 anliegt.

In Richtung des offenen Endes der Fremdkraftzylinderbohrung 4 endet der Führungsabschnitt 6 an der Niederdruckdichtung 10 oder setzt sich ein kurzes Stück von vorzugsweise nicht mehr als ein oder wenige Millimeter axial über die Niederdruckdichtung 10 fort. In Richtung der Ausformung 7 setzt sich der Führungsabschnitt 6 um etwa eine Hälfte eines Abstands zwischen dem Fremdkraftkolben 5 in seiner gezeichneten, rückgezogenen Grundstellung von dem geschlossenen Ende der Fremdkraftzylinderbohrung 4 in der Ausformung 7 fort. Die rückgezogene Grundstellung des Fremdkraftkolbens 5 ist dessen im Betrieb am weitesten vom geschlossenen Ende der Fremdkraftzylinderbohrung 4 entfernte Stellung. Die dem geschlossenen Ende zugewandte Seite des Fremdkraftkolbens 5 und der Hochdruckdichtung 9 sind deren Druckseiten, weil der Fremdkraftkolben 5 bei einer Verschiebung in die Ausformung 7 hinein einen Bremsdruck in der Ausformung 7 und damit in der Fremdkraftzylinderbohrung 4 erzeugt.

Auf der Druckseite des Fremdkraftkolbens 5 beziehungsweise der Hochdruckdichtung 9 weist der Führungsabschnitt 6 eine Rinne als Bremsflüssigkeitskanal 11 auf, die bis zum Fremdkraftkolben 5 in der rückgezogenen Grundstellung oder bis zur Hochdruckdichtung 9 reicht. Der Bremsflüssigkeitskanal 11 kann wie in der Zeichnung achsparallel oder beispielsweise auch wendelförmig verlaufen (nicht dargestellt). Es können mehrere Bremsflüssigkeitskanäle 11 über den Umfang verteilt vorhanden sein (nicht dargestellt).

Zwischen den beiden Kolbendichtungen 9, 10 weist die Fremdkraftzylinderbohrung 4 eine umlaufende Nut 12 auf, in die eine Bremsflüssigkeitsleitung 13 mündet, die zu einem nicht dargestellten, auf den Hydraulikblock 2 aufgesetzten Bremsflüssigkeitsvorratsbehälter führt. Durch die Bremsflüssigkeitsleitung 13 und die Nut 12 gelangt Bremsflüssigkeit zur Schmierung des Fremdkraftkolbens 5 und der Kolbendichtungen 9, 10 auf den Umfang des Fremdkraftkolbens 5, der bei einer axialen Verschiebung in der Fremdkraftzylinderbohrung 4 die Bremsflüssigkeit in axialer Richtung verteilt, so dass der Fremdkraftkolben 5 im Führungsabschnitt 6 der Fremdkraftzylinderbohrung 4 und die Kolbendichtungen 9, 10 geschmiert werden.

Unmittelbar an dem druckseitigen Ende des Fremdkraftkolbens 5 in der rückgezogenen Grundstellung weist die Fremdkraftzylinderbohrung 4 eine weitere, umlaufende Nut 14 auf, die sich über einen begrenzten Umfangsabschnitt erstreckt und in die ebenfalls eine Bremsflüssigkeitsleitung 15 mündet, durch die über Magnetventile 3 nicht dargestellte, hydraulische Radbremsen, die durch Bremsleitungen an den Hydraulikblock 2 angeschlossen sind, an die Fremdkraftzylinderbohrung 4 angeschlossen sind. Durch Verschieben des Fremdkraftkolbens 5 in Richtung des geschlossenen Endes lässt sich ein Bremsdruck in der Fremdkraftzylinderbohrung 4 zu einer Betätigung der Radbremsen erzeugen. Durch den Bremsflüssigkeitskanal 11, der den Führungsabschnitt 6 der Fremdkraftzylinderbohrung 4 bis zu der Nut 14 durchsetzt, kommuniziert die Nut 14 und die in sie münden Bremsflüssigkeitsleitung 15 auch bei verschobenem Fremdkraftkolben 5 mit der Fremdkraftzylinderbohrung 4 zwischen dem Fremdkraftkolben 5 und dem geschlossenen Ende der Fremdkraftzylinderbohrung 4, weil der Bremsflüssigkeitskanal 11 bis in einen durchmessergrößeren Teil der Fremdkraftzylinderbohrung 4 zwischen dem Führungsabschnitt 6 und dem geschlossenen Ende der Fremdkraftzylinderbohrung 4 reicht.

Wie in Figur 1 zu sehen dichtet die Hochdruckdichtung 9 auch in der rückgezogenen Grundstellung des Fremdkraftkolbens 5 an diesem ab, es gibt keine Verschiebestellung des Fremdkraftkolbens 5, in der die Hochdruckdichtung 9 nicht am Fremdkraftkolben 5 abdichtet. Dadurch wird ein Tothub vermieden, bei seiner Verschiebung in der Fremdkraftzylinderbohrung 4 verdrängt der Fremdkraftkolben 5 ausgehend von seiner rückgezogenen Grundstellung von Anfang an Bremsflüssigkeit aus der Fremdkraftzylinderbohrung 4.

Zum Verschieben des Fremdkraftkolbens 5 in der Fremdkraftzylinderbohrung 4 zur Erzeugung eines Bremsdrucks mit Fremdkraft weist das Hydraulikaggregat 1 einen Elektromotor 16 auf, der den Fremdkraftkolben 5 über ein Planetengetriebe 17 als Untersetzungsgetriebe und einen Kugelgewindetrieb 18 in der Fremdkraftzylinderbohrung 4 verschiebt. Der Kugelgewindetrieb 18 kann allgemein auch als Schraubgetriebe oder als Rotation-/Translations-Umsetzungsgetriebe aufgefasst werden. Der Kugelgewindetrieb 18 ist koaxial zum Fremdkraftkolben 5 und zur Fremdkraftzylinderbohrung 4 teilweise in dem Fremdkraftkolben 5 angeordnet, der zu diesem Zweck als Hohlkolben ausgeführt ist. Der Kugelgewindetrieb 18 ist mit einem Kugellager 19 drehbar gelagert, das mit einem rohrförmigen Lagerhalter 20 aussen am Hydraulikblock 2 angeordnet ist. Das Planetengetriebe 17 ist ebenfalls koaxial zur Fremdkraftzylinderbohrung 4 und zum Fremdkraftkolben 5 zwischen dem Kugelgewindetrieb 18 und dem Elektromotor 16 angeordnet. Der Elektromotor 16 weist ein Motorgehäuse 21 auf, das ebenfalls koaxial zur Fremdkraftzylinderbohrung 4 und zum Fremdkraftkolben 5 außen am Hydraulikblock 2 angeschraubt ist. Der Elektromotor 16, das Planetengetriebe 17 und der Kugelgewindetrieb 18 bilden einen elektromechanischen Fremdkraftantrieb 22, mit dem der Fremdkraftkolben 5 zur Erzeugung des Bremsdrucks für die Fahrzeugbremsanlage mit Fremdkraft in der Fremdkraftzylinderbohrung 4 axial verschiebbar ist. Zusammen mit der Fremdkraftzylinderbohrung 4, und dem Fremdkraftkolben 5 bildet der Fremdkraftantrieb 22 einen Fremdkraftbremsdruckerzeuger 23 des erfindungsgemäßen Hydraulikaggregats 1. Eine andere als die elektromechanische Erzeugung des Bremsdrucks mit Fremdkraft schließt die Erfindung nicht aus.

In der dargestellten und beschriebenen Ausführungsform der Erfindung weist der Hydraulikblock 2 eine Hauptbremszylinderbohrung 24 auf, in der ein nicht dargestellter Hauptbremszylinderkolben anordenbar ist, der mechanisch über eine Kolbenstange mit einem nicht dargestellten Fußbremspedal oder einem Handbremshebel in der Hauptbremszylinderbohrung 24 verschiebbar ist. Des Weiteren weist der Hydraulikblock 2 eine Simulatorzylinderbohrung 25 für einen nicht dargestellten, beispielsweise federbeaufschlagten Simulatorkolben auf. Aus der Hauptbremszylinderbohrung 24 ist Bremsflüssigkeit in die Simulatorzylinderbohrung 25 verdrängbar, um bei einer Fremdkraftbetätigung der Fahrzeugbremsanlage den Hauptbremszylinderkolben in der Hauptbremszylinderbohrung 24 verschieben zu können. Außer mit dem Fremdkraftbremsdruckerzeuger 23 lässt sich die Fahrzeugbremsanlage auch mit Muskelkraft durch Verschieben des Hauptbremszylinderkolbens in der Hauptbremszylinderbohrung 24 betätigen, was insbesondere bei einer Störung oder einem Ausfall des Fremdkraftbremsdruckerzeugers 23 vorgesehen ist.

Die Fremdkraftzylinderbohrung 4, die Hauptbremszylinderbohrung 24 und/oder die Simulatorzylinderbohrung 25 können auch anders als durch Bohren hergestellt sein.

Die Fremdkraftzylinderbohrung 4 beziehungsweise der Fremdkraftbremsdruckerzeuger 23 ist durch ein beziehungsweise zwei hydraulisch parallel geschaltete Trennventile 26 und mit den Trennventilen 26 hydraulisch in Reihe geschaltete, nicht dargestellte Einlassventile mit den hydraulischen Radbremsen verbunden. Außerdem ist die Fremdkraftzylinderbohrung 4 beziehungsweise der Fremdkraftbremsdruckerzeuger 23 durch die Trennventile 26 und mit diesen hydraulisch in Reihe geschaltete Ansaugventile 27 an die Hauptbremszylinderbohrung 24 oder den nicht dargestellten Bremsflüssigkeitsvorratsbehälter angeschlossen. In mindestens ein Trennventil 26 ist ein Differenzdruckventil 28 integriert, das einen Maximaldruck in der Fremdkraftzylinderbohrung 4 begrenzt. Dadurch wird ein unzulässig hoher Druck in der Fremdkraftzylinderbohrung 4 beispielsweise auch im Falle einer thermischen Ausdehnung der Bremsflüssigkeit in der Fremdkraftzylinderbohrung 4 ohne Verschiebung des Fremdkraftkolbens 5 verhindert.

Die Trennventile 26 und die Ansaugventile 27 sind Magnetventile 3 der Schlupfregelung der Fahrzeugbremsanlage, mit denen der Hydraulikblock 2 bestückt ist. Die Trennventile 26 und die Ansaugventile 27 sind 2/2-Wege-Magnetventile, wobei die Trennventile 26 in ihren stromlosen Grundstellungen geschlossen und die Ansaugventile 27 in ihren stromlosen Grundstellungen offen sind. In mindestens eines der Trennventile 26 ist wie geschrieben das Differenzdruckventil 28 integriert.

## Patentansprüche

1. Hydraulikblock für ein Hydaulikaggregat einer hydraulischen Fremdkraft-Fahrzeugbremsanlage, wobei der Hydraulikblock (2) eine Fremdkraftzylinderbohrung (4) aufweist, in der ein Fremdkraftkolben (5) axial verschieblich aufgenommen und mit einer Kolbendichtung (9, 10) abgedichtet ist, wobei die Fremdkraftzylinderbohrung (4) einen Führungsabschnitt (6) auf einer Druckseite der Kolbendichtung (9, 10) aufweist, in dem sie den Fremdkraftkolben (5) radial führt, **dadurch gekennzeichnet, dass** der Hydraulikblock (2) einen Bremsflüssigkeitskanal (11) in einer Umfangsfläche der Fremdkraftzylinderbohrung (4) aufweist, die den Führungsabschnitt (6) auf der Druckseite des Fremdkraftkolbens (5) bis zur Kolbendichtung (9) durchsetzt.

2. Hydraulikblock nach Anspruch 1, **dadurch gekennzeichnet, dass** der Fremdkraftkolben (5) in einer rückgezogenen Grundstellung abgedichtet an der Kolbendichtung (9) anliegt.

3. Hydraulikblock nach Anspruch 1 oder 2, **dadurch gekennzeichnet, dass** der Fremdkraftzylinder (4) eine umlaufende Nut (14), in die eine Bremsflüssigkeitsleitung (15) mündet, auf der Druckseite des Fremdkraftkolbens (5) in der rückgezogenen Grundstellung des Fremdkraftkolbens (5) aufweist.

4. Hydraulikblock nach einem oder mehreren der Ansprüche 1 bis 3, **dadurch gekennzeichnet, dass** die Kolbendichtung (9, 10) einen Dichtring aufweist, der ausschließlich aus einem elastischen Werkstoff besteht und/oder keine eigene axiale Stütze gegen eine Druckbeaufschlagung in insbesondere axialer Richtung aufweist.

5. Hydraulikblock nach einem oder mehreren der vorhergehenden Ansprüche, **dadurch gekennzeichnet, dass** die Fremdkraftzylinderbohrung (4) zwei Kolbendichtungen (9, 10) aufweist und dass sich der Führungsabschnitt (6) auch zwischen den beiden Kolbendichtungen (9, 10) erstreckt.

6. Hydraulikblock nach einem oder mehreren der vorhergehenden Ansprüche, **dadurch gekennzeichnet, dass** sich der Führungsabschnitt (6) der Fremdkraftzylinderbohrung (4) für den Fremdkraftkolben (5) nur über einen Teil einer Länge der Fremdkraftzylinderbohrung (4) auf der Druckseite des Fremdkraftkolbens (5) und/oder nicht auf einer der Druckseite abgewandten Seite der der Druckseite fernen Kolbendichtung (10) erstreckt.

7. Hydraulikblock nach einem oder mehreren der vorhergehenden Ansprüche, **dadurch gekennzeichnet, dass** die Fremdkraftzylinderbohrung (4) durch ein Rückschlagventil oder durch ein Differenzdruckventil (28) und durch ein steuerbares Ansaugventil (27) im Hydraulikblock (2) an eine Hauptbremszylinderbohrung (24) und/oder an einen Bremsflüssigkeitsvorratsbehälter angeschlossen ist.

8. Hydraulikblock nach Anspruch 7, **dadurch gekennzeichnet, dass** das Rückschlagventil oder das Differenzdruckventil (28) in ein steuerbares Trennventil (26) integriert ist, durch das eine Radbremse an die Fremdkraftzylinderbohrung (4) angeschlossen ist.

9. Hydraulikblock nach einem oder mehreren der vorhergehenden Ansprüche, **dadurch gekennzeichnet, dass** der Hydraulikblock (2) einen Fremdkraftantrieb (22) zum Verschieben des Fremdkraftkolbens (5) in der Fremdkraftzylinderbohrung aufweist.

## Claims

1. Hydraulic block for a hydraulic arrangement of a hydraulic power-assisted vehicle brake system, wherein the hydraulic block (2) has a power-assisted cylinder bore (4), in which a power-assisted piston (5) is accommodated in an axially displaceable manner and is sealed with a piston seal (9, 10), wherein the power-assisted cylinder bore (4) has a guide portion (6) on a pressure side of the piston seal (9, 10), in which it guides the power-assisted piston (5) radially, **characterized in that** the hydraulic block (2) has a brake fluid channel (11) in a circumferential surface of the power-assisted cylinder bore (4), the brake fluid channel passing through the guide portion (6) on the pressure side of the power-assisted piston (5) as far as the piston seal (9).

2. Hydraulic block according to Claim 1, **characterized in that** the power-assisted piston (5), in a retracted basic position, lies sealed on the piston seal (9).

3. Hydraulic block according to Claim 1 or 2, **characterized in that** the power-assisted cylinder (4) has a peripheral groove (14), into which a brake fluid line (15) leads, on the pressure side of the power-assisted piston (5) in the retracted basic position of the power-assisted piston (5).

4. Hydraulic block according to one or more of Claims 1 to 3, **characterized in that** the piston seal (9, 10) has a sealing ring which is composed exclusively of an elastic material and/or does not have a dedicated axial support against pressurization in the axial direction in particular.

5. Hydraulic block according to one or more of the preceding claims, **characterized in that** the power-assisted cylinder bore (4) has two piston seals (9, 10), and **in that** the guide portion (6) also extends between the two piston seals (9, 10).

6. Hydraulic block according to one or more of the preceding claims, **characterized in that** the guide portion (6) of the power-assisted cylinder bore (4) for the power-assisted piston (5) extends only over part of a length of the power-assisted cylinder bore (4) on the pressure side of the power-assisted piston (5) and/or does not extend on a side, which faces away from the pressure side, of the piston seal (10) remote from the pressure side.

7. Hydraulic block according to one or more of the preceding claims, **characterized in that** the power-assisted cylinder bore (4) is connected by a nonreturn valve or by a differential pressure valve (28) and by a controllable intake valve (27) in the hydraulic block (2) to a master brake cylinder bore (24) and/or to a brake fluid reservoir.

8. Hydraulic block according to Claim 7, **characterized in that** the nonreturn valve or the differential pressure valve (28) is integrated in a controllable isolation valve (26) through which a wheel brake is connected to the power-assisted cylinder bore (4).

9. Hydraulic block according to one or more of the preceding claims, **characterized in that** the hydraulic block (2) has a power-assisted drive (22) for displacing the power-assisted piston (5) in the power-assisted cylinder bore.

## Revendications

1. Bloc hydraulique pour un groupe hydraulique d'un système hydraulique de freinage de véhicule par force externe, le bloc hydraulique (2) présentant un alésage (4) de cylindre de force externe dans lequel un piston (5) de force externe est reçu de manière déplaçable axialement et est rendu étanche au moyen d'un joint de piston (9, 10), l'alésage (4) de cylindre de force externe présentant une section de guidage (6) sur un côté pression du joint de piston (9, 10) dans lequel il guide radialement le piston (5) de force externe, **caractérisé en ce que** le bloc hydraulique (2) présente un canal (11) de liquide de frein dans une surface périphérique de l'alésage (4) de cylindre de force externe qui traverse la section de guidage (6) sur le côté pression du piston (5) de force externe jusqu'au joint de piston (9).

2. Bloc hydraulique selon la revendication 1, **caractérisé en ce que** le piston (5) de force externe s'applique de manière étanche contre le joint de piston (9) dans une position de base rétractée.

3. Bloc hydraulique selon la revendication 1 ou 2, **caractérisé en ce que** le cylindre de force externe (4) présente, du côté pression du piston (5) de force externe, une rainure périphérique (14) dans laquelle, dans la position initiale rétractée du piston (5) de force externe, débouche une conduite de liquide de frein (15) .

4. Bloc hydraulique selon une ou plusieurs des revendications 1 à 3, **caractérisé en ce que** le joint de piston (9, 10) présente une bague d'étanchéité qui est exclusivement constituée d'un matériau élastique et/ou qui ne présente pas d'appui axial propre contre une sollicitation en pression dans la direction notamment axiale.

5. Bloc hydraulique selon une ou plusieurs des revendications précédentes, **caractérisé en ce que** l'alésage (4) de cylindre de force externe comporte deux joints de piston (9, 10) et **en ce que** la section de guidage (6) s'étend également entre les deux joints de piston (9, 10).

6. Bloc hydraulique selon une ou plusieurs des revendications précédentes, **caractérisé en ce que** la section de guidage (6) de alésage (4) de cylindre de force externe pour le piston (5) de force externe ne s'étend que sur une partie d'une longueur de l'alésage (4) de cylindre de force externe sur le côté pression du piston (5) de force externe et/ou pas sur un côté opposé au côté pression du joint de piston (10) éloigné du côté pression.

7. Bloc hydraulique selon l'une ou plusieurs des revendications précédentes, **caractérisé en ce que** l'alésage (4) de cylindre de force externe est raccordé à un alésage de maître-cylindre de frein (24) et/ou à un réservoir de liquide de frein par un clapet anti-retour ou par une soupape de pression différentielle (28) et par une vanne d'aspiration commandable (27) dans le bloc hydraulique (2).

8. Bloc hydraulique selon la revendication 7, **caractérisé en ce que** le clapet anti-retour ou la soupape de pression différentielle (28) est intégré(e) dans une vanne d'isolation commandable (26), par laquelle un frein de roue est raccordé à l'alésage (4) de cylindre de force externe.

9. Bloc hydraulique selon une ou plusieurs des revendications précédentes, **caractérisé en ce que** le bloc hydraulique (2) comporte un moyen (22) d'entraînement par force externe pour déplacer le piston (5) de force externe dans l'alésage du cylindre à force extérieure.
